Europäisches Patentamt

European Patent Office

Office européen des brevets

(19)

(11) Publication number: **0 260 211**
**A2**

(12) **EUROPEAN PATENT APPLICATION**

(21) Application number: 87500056.4

(22) Date of filing: 08.09.87

(51) Int. Cl.⁴: **B 60 C 23/00**

(30) Priority: 08.09.86 ES 8601937

(43) Date of publication of application:
16.03.88 Bulletin 88/11

(84) Designated Contracting States:
AT BE CH DE FR GB GR IT LI LU NL SE

(71) Applicant: Oglio, Carlos G.
Deu y Mata, 96
E-08029 Barcelona (ES)

(72) Inventor: Oglio, Carlos G.
Deu y Mata, 96
E-08029 Barcelona (ES)

(74) Representative: Gomez-Acebo y Pombo, José Miguel
c/o CLARKE, MODET & Co. Balmes, 191
E-08006 Barcelona (ES)

(54) An automatic inflation and pressure control device for the tyres of motor vehicles with air compressors.

(57) Automatic inflation and pressure control device for the tyres of motor vehicles with air compressor, of the type where each wheel is connected to he pressurized air deposit fed by the compressor through a duct connected with the pneumatic chamber of the wheel through a kinetic joint (e) which includes two freely rotating, interconnected sections (e', e''), the first (e') of which is fixed to the hub of the wheel and the second to the respective end of the duct said first section (c') of the kinetic joint (e) is made up of a bushing (6) coaxially fixed by the respective cylinder head to the hub (1) of the wheel, forming on its inside a recess for the second section (e''), which is made up of a tubular axis (4) arranged rotatively and coaxially in respect to the hub (1). This axis (4) comprises an end head with a nozzle connector, to which is applied the end of the flexible section of the ductway,and includes an internal end intake opening that fits hermetically, with free rotation, inside a correspondig internal recess in the cylinder head. Each of the chambers in the single wheels in the frontal train is connected directly to the respective kinetic joint, while each pair of wheels at the ends of the rear trains are connected to the kinetic joint through respective check valves. The wheels of each train are connected to the air deposit by independent ducts controlled by their respective check valves.

FIG.1

Bundesdruckerei Berlin

## Description

### "AN AUTOMATIC INFLATION AND PRESSURE CONTROL DEVICE FOR THE TYRES OF MOTOR VEHICLES WITH AIR COMPRESSORS"

This invention refers to an automatic inflation and pressure control device for the tyres of motor vehicles with air compressors. It is of the type where each wheel is connected to the pressurized air deposit which is fed by the compressor through a duct that includes a flexible section situated between a section that is integral to the frame and the intake opening of the respective pneumatic chamber. This chamber is connected by means of a kinetic joint which includes two freely rotating, interconnected sections; the first is fixed to the hub of the wheel, and the second to the respective end of the above-mentioned flexible section.

As is well known, one of the most serious problems that the large motor vehicles have, whether they are for the transportation of passengers or cargo, and especially those used for middle or longer distance travels, resides in ensuring the correct performance of the tyres. This means making sure the tyres are inflated and stay inflated with the right amount of pressure for the load being carried and for the road conditions. This way one can ensure not only the preservation of the outer covering of the tyres, but also the correct operation of the vehicle without any risks.

Another problem lies in the inconveniences caused by the small air leaks in the tyres, due to whatever cause, which don't imply any danger of a blow out, but do force one to stop the vehicle and change the tyre. This translates as a considerable loss of time and costly expense if we take into account that special equipment is needed to lift the part of the vehicle affected due to its great weight, as well as the fact that the mounting of the wheels is very complex, especially when dealing with the inner wheel of a pair.

There are devices which permit the operation of the vehicle with the wheels connected to the compressor fed air deposit in such a way that it is possible to increase the pressure in the tyres or compensate for small leaks, whether the vehicle is stopped or in motion, without affecting the normal operation or causing risky situations. However, these suffer from various drawbacks, for example: the complexity of the construction of the kinetic connection joint between the duct fixed to the vehicle frame and the intake opening of the wheel pneumatic chambers. This joint is supposed to maintain a steady communication between the deposit and the chamber, regardless of whether the vehicle is in motion or stopped.

The principal and basic proposition of this invention is to obtain a device of the type referred to above, equipped with a kinetic joint for each of the wheels in the frontal train and for each pair in the rear train of wheels.This device is of simple construction and maximum effectiveness in ensuring the free rotation bertween the intake opening of the tyre chambers and the duct fixed to the vehicle frame without causing the slightest chance of a leak.

A device has been realized by which it is possible to establish equal or different levels of pressure in the front train of wheels and the rear train or trains. This is accomplished by means of a closed circuit of pressurized air set up in relation to each train of wheels independently of the others.If for whatever reason the pressure in any one of the tyres should decrease, either in the front train or in the rear, this pressure would automatically be re-established.

However, this does not produce any alteration what-so-ever within the train circuit nor in the other train, and in each circuit, the loss of air pressure in the tyre at one end of the set remains confined to that end; that is, it doesn't effect the tyre on the other end. This way, a tyre on one end of a set, which isn't able to be adjusted by the vehicle own pressurized air supply installation, doesn't effect the tyre on the other end. Also, in the case of a pair of wheels in the rear train, such a loss of air in one of the tyres - whether an inside or an outside wheel - would not effect the other tyre if that one wasn't damaged as well.

This invention has also succeeded in making it possible to deliberately produce a loss of air in the closed circuit of either train of wheels from the cabin and under complete control. For example, in the case of an unevenly distributed load, a certain amount of deflation can be attained this way in the respective tyres, making for better operation of the vehicle.

Another of the proposals of this invention consists of acheiving a device in accordance with all the above, that could be used with any number of rear wheel trains. This would mean either a closed circuit of pressurized air common to all of them or respective, independent circuits that in any case would operate as indicated earlier.

A further objective of this invention lies in making this device give a signal (either with a light or with sound) when there is a loss in pressure, indicating the train of wheels in which the leak is located and/or at which end the affected tyre is located.

All of these objectives and proposals, as well as others that will come to light later, have boiled down to a practical form of the device that is the object of this invention. In the interest of greater clarity and better understanding, the device has been illustrated in several figures in accordance with one of its preferred forms of realization and application, with simple example titles:

Figure 1: a schematic view that shows the general distribution of the different elements that make up the device in its application to the vehicle.

Figure 2: a semi-schematic view of the kinetic joint in a longitudinal section drawings, showing the elements that make it up and the interconnection between them.

In the drawings, the same number or letter indicates equal or corresponding parts and elements.

As can be perceived in the above and in the illustrations, the automatic inflation and pressure control device for motor vehicles with air compessors which is the object of this invention, has been developed based on a general, conventional layout. According to this layout, each wheel a is connected to the pressurized air deposit b which feeds the compressor via a duct c that includes a flexible section I extended between a fixed section II (normally rigid and integral to the vehicle frame d) and the intake opening of the respective pneumatic chamber of the tyre. This chamber is indirectly connected via a kinetic joint and permits the rotation of the intake opening, moving with the tyre and maintaining a fluid communication between the chamber and the fixed section II of the ducting, and thereby with the air deposit as well.

The flexible section I is designed to make possible the movement of the frame in relation to the wheels. This is determined by the supension and by the change in direction in the case of the front train of wheels.

This kinetic joint e includes two sections which are interconnected with a free rotation between them; the first e' is fixed to the hub 1 of the wheel, and the second e'' consists of the respective end of the flexible section I mentioned before, which retains the joint e without turning due to its connection to section II which is fixed to the frame. Due to its flexibility, section I doesn't impede the natural lay between the frame and the other section e'', that is, the joint integral to the wheel of which it forms a part.

In this invention, the section e' of the kinetic joint e is generally made up of a bushing coaxially fixed to the hub 1 of the wheel by the respective cylinder head, forming in its interior hole 3 a recess for the second section e'' of the joint which is basically made up of a tubular axis 4 mounted rotatively and coaxially in relation to the hub just mentioned by means of a ball bearing 5 by which it is related to some means of axially retaining it at the bushing section e' means which will be referred to later.

This axis 4 presents an end head 6 that sticks out of the opening 7 in the bushing, through a neck portion 6' passing through a cover 8 associated on its inside with a lubricant retainer 9 that fits around this portion 6'.

The head piece or crown section 6'' of the end head 6 that sticks well out of the opening 7 in the bushing and outside of cover 8, presents a connecting opening 29 that projects radially and to which is applied the end of the flexible section I of duct c.

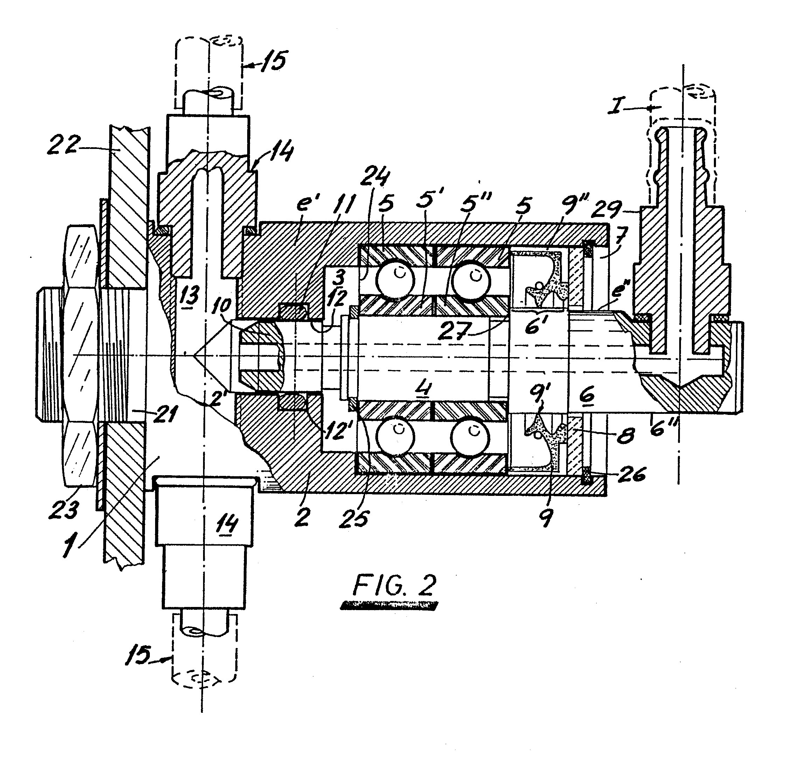

The head piece 6'' includes on its internal end, opposite head 6, a coaxial intake 10 that adjusts hermetically with free rotation by means of packing up of a sealing gasket of any type 11 arranged in an internal neck 12 of the cylinder head which has an annular groove 12' in which joint 11 is held. The doughnut shaped portion of the joint 11 establishes this hermetic adjustment around the lateral cylindrical of opening 10, as it can be seen in figure 2.

This internal neck 12 communicates through its back end, through an axle duct 2' of the cylinder head 2, blocked off from the outside of the cylinder head, with an air distribution chamber 13. From this chamber, a lateral nozzle 14 branches off for connecting a flexible tubular extension 15 which is to connect with opening 10 of the pneumatic chamber of the tyre.

This chamber in the single wheels a in the front train T.D. is connected directly to chamber 13 of the respective kinetic joint without any kind of intermediary valve. This is different from what happens with the pairs of tyres a in the dual end sets in the rear wheel train(s) T.T.; their respective pneumatic chambers are independently connected to said distributor chamber 13 of the cylinder head by means of respective, flexible, tubular extensions 15 between the corresponding opening 10 and nozzle 14, but in this case passing through respective anti-air return spring check valves 15', towards chamber 3.

The wheels a on both ends of each train of wheels are connected to air deposit b through various independent ducts c' that branch off from the connector in "T" 16 of the principal duct c, which comes from the deposit, and are controlled by the respective electrovalves f.

Each of these ducts c' has in turn respective branches c'' at each end of the set of wheels with respective retention valves 17 that block any return from the tyres and a pressure switch or similar g, located between each valve and the respective end, capable of operating a circuit 18 that controls the respective electrovalve through a control panel h situated near the driver.

Within the scope of this invention is included an auxiliar circuit in relation to the frontal wheels T.D. that, through a pneumatic switch 19 (included in said control panel h) and a set of retention valves 20, permits the reduction of the pressure in these tyres whenever it is advisable in order to achieve better operation of the vehicle.

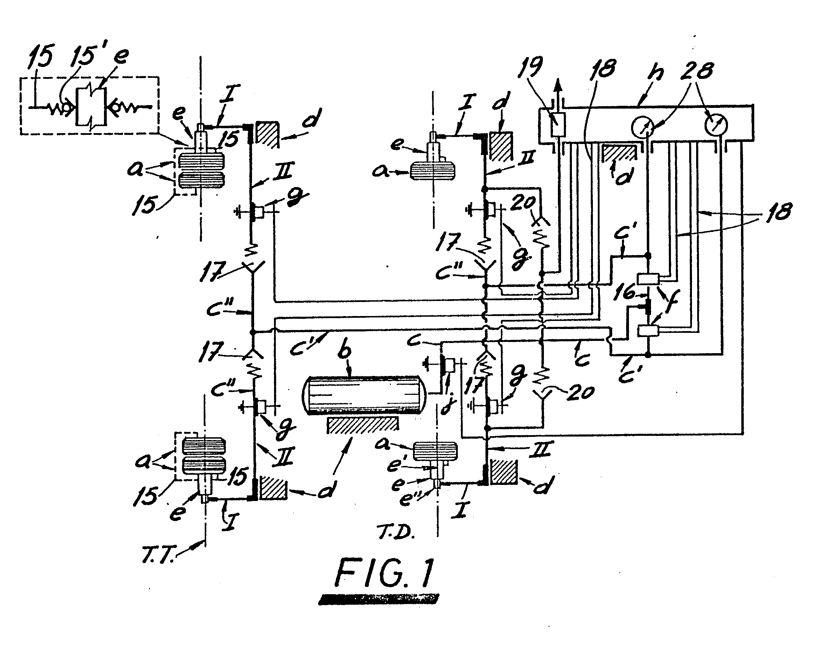

In reference to the said kinetic joint e it may be added that a single joint works equally well in the case of the single front wheels and in dual sets of wheels at the ends of the rear trains. The only difference is that in the first case the bushing cylinder head provides only one nozzle 14 for the connection to the opening 10 of the respective pneumatic chamber; the adaptation housing for the other nozzle, generally diametrically opposite, is hermetically sealed by a plug, coiled around itself with the insertion of hermetic sealing means. In the case of dual tyres, both of the nozzles 14 foreseen are provided. To each of these, one of the wheel pneumatic chambers is connected individually, through the corresponding check valve 15, in regard to which, as with similar valves 17 and 20 mentioned before, greater detail is not given, since for that purpose any type of valve made available by this technique is applicable, for example a ball valve strained to the action of a compressor spring, just as all these valves have been drawn in figure 1.

No limit whatsoever is established in relation with the form of attachment of this kinetic joint to the hub of the wheel, since different layouts can be adopted according the type of hub to which it is attached. In relation with the most widespread type of hub, the attachment envisaged would be established using a rod 21 that projects coaxially to the bushing from the outside of its cylinder head 2, and inserts itself through the usual outside cover 22 of the hub, from whose internal part it sticks a point out where a nut 23 is placed with the inclusion of any retaining element that might impede all possibility of the bushing rotation in relation to this cover and thereby the wheel.

Obviously, the exterior diameter of the bushing is appreciably less than that of the hub cover 22 so that it doesn't cause any disturbance in the performance of its respective holding screws; for a better understanding of what has just been explained, it may be pointed out that the exterior damage of the bushing illustrated in figure 2 corresponds to the real diameter of 40 mm, and that this whole figure corresponds to a scale drawing of the real kinetic joint.

The referred means by which the axial retention of the tubular section-axis 4 of the kinetic joint $e$ is established with the bushing or the first section $e'$ of the joint itself through the ball bearings 5, without impeding its free rotation, are made up of, in this example, on the inside, an internal annular step of the side wall of the bushing, determined by a widening from the same joint to the cylinder head 2, against which it makes an axial arrester from outside toward the inside of the exterior ring 5' of the ball bearings 5 (made up in this case of a pair of radial bearings juxtaposed together).

Always on the inside, these means are complemented by an expandible ring 25 adjusted inside a groove on the internal end of the axis, from which sticks partially out forming an axial stopping annular nose from the outside inward for the internal ring 5" of the ball bearings.

On the outside, said cover 8 rests against the external ring 5 of the ball bearing through peripheral fin 9" of the lubricant retainer 9, in such a way as to keep them both completely separated from the internal ring and the axis, which then turns freely in respect to both of these elements, with the sealing lip 9' of the retainer fitted over its neck 6'.

Both of the elements cover 8 and retainer 9', together with the bearing 5, are axially retained from the inside out by means of an interior annular nose in the wall of the bushing, defined by the portion that sticks out from a groove, on which is fitted an expanding ring 26 through a natural elastic reaction.

This external retention is complemented by an annular step 27 from the axis 4, located between its neck 6' and its middle section where the double-bearing and against which the internal ring of the latter makes an axial arrester.

Consequently, the tubular axis 4 makes an axial arrester from the outside of the bushing, through its annular step 27 on the annular step 24 of the latter through the ball bearing 5, and on the contrary, from the inside out, through the ring-annular nose 25, on the ring-annular protusion 26 of the bushing entrance, through the ball bearing, retainer and cover.

To all of the above written in relation with the making of the device, it can be added that, in the case of the vehicle includes more than one train of rear wheels, that each one of them will be able to be controlled through its own independent duct $c'$ as described, branched off from the main duct $c$ that feeds into the air deposit $b$ or through a duct that furnishes respective branches $c''$ en relation to the tyres at the end of each train, each with its respective check valve 17 and pressure switch $g$.

On the other hand, each of these ducts $c'$ is furnished with a corresponding pressure meter 28 situated in said control panel $h$, in which is envisaged the inclusion of light and/or sound warning signals that begin functioning when any kind of leak is produced in the system, and that indicate the train of wheels and the end tyre in this train that has suffered the leak.

Normally, when the device is activated, the ducts connected to each of the wheel trains - and thereby to the respective tyes - must be charged with the right pressure, which will be reached once the sets of bearings are set up, using the pressurized air supply provided by the deposit, which is charged in turn by the respective compressor. This suply will have been carried out via the respective electrovalves $f$, whose circuit is regulated so that they cut off the supply when the working pressure level is reached.

When a leak is produced in a tyre on one end of a frontal train $T.D.$, the check valve 17 of branch $c''$ connected to the tyre $a$ at the other end stops it from simultaneously deflating; that is, it makes it independent from the leak in the affected tyre in spite of being interconnected. This produces a progressive emptying or decrease in the pressure, limited to the duct $c''$ which connects with the last tyre and with the corresponding duct $*c'$ to that train of wheels. This decrease is registered by the respective pressure switch $g$ of the latter branch and activates the corresponding electrovalve $f$. This determine its connection to the deposit $b$ which injects pressurized air until re-establishing a working pressure, and then the electrovalve cuts off this refeeding. If the leak should continue, this will be re-established, and it will be registered again by the pressure meter, and so on in the case of a continuous leak, which is the most normal kind.

This continuous supply will be maintained as long as it doesn't imply a decrease in pressure in the deposit which would impede the normal performance of the vehicle pneumatic brakes, since in the case of the pressure in the deposit descending below a predetermined safety level, the pressure switch $j$, located in the main duct $c$ at the deposit outlet, will cause the closing of duct $c'$ electrovalve which feeds the train of wheels in which the leak has been discovered.

None of that affects the wheel corresponding to the other end of this train of wheels, since the check valve 17 of its respective branch $c''$ acts from the beginning to hold in its charge of air.

It is clear that a leak of this extent in one of the wheels in the frontal train makes it essential to change the tyre, but it is occurs in one of the rear pairs, it may be possible for the vehicle to go on, since complementary wheel of the pair will have remained isolated from the other by the respective

check valve 15' inserted into its connection to the kinetic joint, which cuts off its return connection to the distribution chamber 13 of the joint and with that it cuts off its connection to the damaged tyre, thus keeping the amount of air at a working level, since the check valve will have been working since the beginning of the leak, that is as soon as the pressure in this tyre began to drop.

When it is in the best interests of operation to deflate the tyres of the frontal train and/or rear train of wheels - for example in the case of charges that are not well distributed - one need only use the pneumatic switch 19 which forms part of the control panel, that is to say in the cabin itself. This will produce a discharge of air through an auxiliar duct to the outside. In the example presented here, only the tyres in the frontal train could possibly be deflated.

With the nature of the invention, as well as the way to put it to use, sufficiently described here, it should be stated that whatever does not alter, change or modify its fundamental principle can be subjected to variations of details.

train connected directly to the respective kinetic joint, while each pair of wheels at the ends of the rear trains are connected to the kinetic joint through respective spring check valves, and with the wheels of each train being connected to the air deposit by independent ducts controlled by their respective check valves and pressure switch, or something like one, between the valve and the end of the train of wheels, capable of operating a control circuit of the respective electrovalve.

**Claims**

1.- Automatic inflation and pressure control device for the tyres of motor vehicles with air compressors, of the type where each wheel is connected to the pressurized air deposit fed by the compressor through a duct that includes a flexible section between a section integral to the frame and the intake opening of the respective pneumatic chamber, which is connected through a kinetic joint which includes two freely rotating, interconnected sections, the first of which is fixed to the hub of the wheel and the second to the respective end of the flexible section mentioned earlier, characterized by the fact that the first section of the kinetic joint is made up of a bushing coaxially fixed by the respective cylinder head to the hub of the wheel, forming on its inside a recess for the second section of the joint, which is made up of a tubular axis arranged rotatively and coaxially in respect to the hub mentioned above, by means of ball bearings and related through the latter to means of axially retaining the bushing, with this axis presenting an end head that sticks out of the bushing opening through a cover that has a lubricant retainer and a nozzle connector, to which is applied the end of the flexible section of the ductway, with the axis including an extreme interior intake opening that, being coaxil to the axis, fits hermetically, with free rotation, through packing means, inside a corresponding, internal recess in the cylinder head, that through the bottom of it communicates with an air distribution chamber in the latter, from which a lateral nozzle branches out for the connection of a flexible tubular extension of the intake opening in the tyre pneumatic chamber, with each of the chambers in the single wheels in the frontal

FIG.1

0260211

FIG. 2